(19) Europäisches Patentamt
European Patent Office
Office européen des brevets

(11) Publication number: **0 379 215 B1**

(12) **EUROPEAN PATENT SPECIFICATION**

(45) Date of publication of patent specification: **08.06.94**

(51) Int. Cl.5: **G05B 23/02**, G05B 11/42, G05B 13/04

(21) Application number: **90101094.2**

(22) Date of filing: **19.01.90**

(54) **Control system design method and design support apparatus.**

(30) Priority: **20.01.89 JP 9682/89**

(43) Date of publication of application:
**25.07.90 Bulletin 90/30**

(45) Publication of the grant of the patent:
**08.06.94 Bulletin 94/23**

(84) Designated Contracting States:
**DE FR GB IT**

(56) References cited:
**DE-A- 3 618 025**

**INSTRUMENTS AND CONTROL SYSTEMS. vol. 48, no. 9, September 1975, Radnor,US; pages 31-36; S.J.ZITEK & Y.C. PAO: "Computer graphics aids Bode analysis"**

**CONTROL ENGINEERING, vol. 35, no. 11, November 1988, New York,US;page 99;G.J. BLICKLEY: "PID tuning made easy with hand-held computer"**

(73) Proprietor: **KABUSHIKI KAISHA TOSHIBA**
**72, Horikawa-cho**
**Saiwai-ku**
**Kawasaki-shi Kanagawa-ken 210(JP)**

(72) Inventor: **Iino, Yutaka**
**Heartland-yoshizawa 202, Noborito 498,**
**Tama-ku**
**Kawasaki-shi, Kanagawa-ken(JP)**
Inventor: **Shigemasa, Takashi**
**2-7-4 Higashihongou, Midori-ku**
**Yokohama-shi, Kanagawa-ken(JP)**

(74) Representative: **Lehn, Werner, Dipl.-Ing. et al**
**Hoffmann, Eitle & Partner,**
**Patentanwälte,**
**Postfach 81 04 20**
**D-81904 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

1. Field of the Invention

The present invention relates to a control system design method and a design support apparatus that decide and adjust controller parameters of control systems of industrial plants and mechanical systems. Particularly, the present invention relates to a control system design method and a design support apparatus that use a desired method of deciding control parameters to design a stable control system easily, quickly and reliably.

2. Description of the Prior Art

For control systems employed in various industrial plants and mechanical systems such as manipulators, it is essential to properly set their control parameters such as PID controller's constants so that controlled objects may provide desired responses.

To support the design of the control systems and the adjustment of the control parameters, computer aided engineering systems (CAE Systems) have been developed. The computer aided engineering systems are designed to readily handle various kinds of control system design methods.

In designing a control system with the computer aided engineering system, a mathematical model, i.e., a transfer function is needed to express dynamic characteristics of a controlled object. To obtain the transfer function, several methods are known.

One method expresses the dynamic characteristics of the controlled object with differential equations according to the physical structure of the controlled object and obtains the transfer function by linear approximation.

Another method inputs a test signal to the controlled object to obtain a response signal. Based on the input and response signals, a time series model, i.e., a pulse transfer function is obtained according to the least square method.

The other method inputs a sinusoid wave signal to the controlled object. Based on the amplitude ratio and phase difference of the sinusoid wave signal and the basic wave component of an output signal, a frequency response curve of the controlled object is obtained. (For example, a scientific journal book titled "System Identification" by Akizuki, Katayama, Sagara and Nakamizo, published by the Society of Instrument and Control Engineers (SICE) in Japan in 1981.

To design a control system, particularly to decide control parameters of the control system, the following methods are well known:

(1) Ziegler-Nichols method by J.G. Ziegler and N.B. Nichols disclosed in "Optimum Settings for Automatic Controllers," Trans., ASME, Vol. 64 (1942), pp. 759 to 768;

(2) CHR method by Kun Li Chien, J.A. Hrones and J.B. Reswick disclosed in "On the Automatic Control of Generalized Passive Systems," Trans., ASME, Vol. 74 (1952), pp. 175 to 185; and

(3) Partial model matching method by Kitamori, disclosed in "A method of control system design based upon partial knowledge about controlled processes" Trans. Society of Instrument and Control Engineers, theses Vol. 15 (1979), No. 4, pp. 549 to 555 in Japanese.

To decide control parameters of a PID (Proportional Integral Derivative) control system that is widely employed in an industrial field, the partial model matching method is also effective as the Ziegler-Nichols and CHR methods. In addition, the partial model matching method is advantageous because it is easily applicable for designing a decoupling PID controller for a multiple-input-output process (Kitamori: "A Design Method for I-PD Type Decoupled Control Systems Based upon Partial Knowledge about Controlled Processes" Trans. Society of Instruments and Control Engineers ), as well as applicable for designing a sampled value control system (Kitamori: "A Design Method for Sampled Data Control Systems Based upon Partial Knowledge about Controlled Process" Trans. Siociety of Instruments and Control Engineers, Vol 15, No. 5 pp. 695-700 (1979).

However, in applying these control system design methods for an actual control system, a continuous-time dynamic characteristic model, i.e., a transfer function of the controlled object is needed. In addition, the type of the transfer function is limited by the design methods. For example, for the Ziegler-Nichols method, the transfer function shall have the following form:

$$G(S) = (K/S)e^{-LS} \qquad (1)$$

where S is the Laprace Operator.

For the CHR method, the transfer function shall have the following form:

$$G(S) = (K/(1+TS))e^{-LS} \qquad (2)$$

The partial model matching method is applicable for the following types of transfer functions:

$$G(S) = B(S)/A(S)$$
$$A(S) = a_0 + a_1 S + a_2 S^2 + \ldots + a_n S^n$$
$$B(S) = b_0 + b_1 S + \ldots + b_m S^m \qquad (3)$$

However, if a transfer function has a zero point such as in an overshoot system, or if the transfer function has complex poles namely oscillatory direct response application of the partial model matching method may result in providing control parameters that form an unstable control system.

In obtaining a transfer function according to the methods previously explained, it is not certain whether or not the obtained transfer function has a form suitable for the control system design methods just explained. For example, a transfer function obtainable from the physical structure of a controlled object is generally of high degree. A time series model estimated by the least square method, i.e., a pulse transfer function is not directly applicable for the design methods. A frequency response curve measured on a controlled object is not directly applicable for the design methods.

Therefore, to apply the control system design methods for various kinds of dynamic characteristic models, each model shall be converted into a continuous-time transfer function and then converted into a simple form such as the form of equation (1) or (2). Namely, there is a need to provide means to reduce the degree of a transfer function.

To reduce the degree of a transfer function, various methods have been proposed. For example, "Automatic Control Handbook (Basics)" edited by Society of Instrument and Control Engineers in 1983, pp. 85 to 89 may be referred to. However, it is not clear which of the methods are effective for the control system design methods.

## SUMMARY OF THE INVENTION

The present invention is to solve these problems of the conventional methods and provides a control system design method and a design support apparatus that find a model of a desired transfer function according to dynamic characteristic data which may take any form, of a controlled object to design a reliable control system easily and quickly by using a desired control constant decision method.

In order to accomplish the object, the control system design method according to the present invention is arranged as shown in Fig. 1. In the figure, the method comprises a process S1 for forming a frequency response curve of the controlled object according to inputted dynamic characteristic data that may take a form of continuous-time transfer function, pulse transfer function, frequency response data or input/output signal data; a process S2 for selecting an optional model transfer function among a plurality of model transfer functions that are low degree transfer functions prepared in advance to express frequency response curves respectively; a process S3 for moving an approximate curve that represents the selected model transfer function toward and away from the frequency response curve of the controlled object and fixing approximate curve at an optional position; a process S4 for deciding parameters of the selected model transfer function according to the fixed position of the approximate curve; a process S5 for selecting optional one of a plurality of control parameter deciding methods that have been prepared in advance to decide control parameters according to the model transfer function whose parameters have been decided in the previous process; and a process S6 for deciding the control parameters based on the model transfer function whose parameters have been decided, and according to the control parameters deciding method selected in the process S5.

The design support apparatus of the present invention comprises means for executing the respective processes of Fig. 1. The apparatus comprises frequency response curve forming means for forming a frequency response curve of a controlled object according to inputted dynamic characteristic data that may take a proper form of continuous-time transfer function, pulse transfer function, frequency response data or input/output signal data of the controlled object; model selecting means for selecting an optional model among a plurality of model transfer functions that are low degree transfer functions prepared in advance to express frequency response curves respectively; approximate curve moving means for moving an approximate curve representing the selected model transfer function toward and away from the frequency response curve of the controlled object prepared by the frequency response curve forming means and fitting the approximate curve at an optional position; parameter deciding means for deciding parameters of the model transfer function selected by the model selecting means, according to the fixed position of the approximate curve; control parameter deciding method selecting means for selecting an optional method among a plurality of control parameter deciding methods that have been prepared in advance to decide controller parameter based on the model transfer function whose parameters have been decided by the parameter deciding means; and control parameter deciding means for deciding the controller parameter based on the model transfer function whose parameters have been decided by the parameter deciding means, and according to the control parameter deciding method selected by the control constant deciding method selecting means.

According to the control system design method of the present invention, the dynamic characteristic data of proper form of a controlled object is inputted, and, based on the data, a frequency response curve of the controlled object is formed. An appropriate model is selected among the models of low degree transfer functions that have been prepared in advance. An approximate curve representing the selected model is moved toward and away from the frequency response curve and fixed at a desired position. Based on the fixed position, parameters of the model are decided.

After that, an optional method is selected among the control constant deciding methods that have been prepared in advance. By using the selected method and based on the model transfer function, the controller parameter are decided.

With gain K, time constant T, oscillation characteristic parameters $\xi$ and $\omega$ and dead time L, the following model transfer functions may be prepared:

$$G_1(S) = (K/L)e^{-LS} \quad (4)$$

$$G_2(S) = (K/(1+TS))e^{-LS} \quad (5)$$

$$G_3(S) = (\omega^2 K/(\omega^2 + 2\xi\omega S + S^2))e^{-LS} \quad (6)$$

As the control constant deciding methods, the Ziegler-Nichols method, CHR method and partial model matching method are employed. In the process S3, an approximate curve representing a selected model transfer function is fitted at an appropriate position with respect to a frequency response curve of the controlled object formed in the process S1. As a result, parameters such as K, T, L, $\xi$ and $\omega$ and controller parameter such as a proportional gain KP, an integral time TI and a derivative time TD can be decided easily and quickly.

As shown in Fig. 2, to keep stability that is essential for a control system, a stability margin (gain margin and phase margin) shall be reserved. The stability margin is determined by characteristics of a cut off frequency band, namely an intermediate frequency band in the range of frequencies $\omega$p and $\omega$g on the frequency response curve of a loop transfer function from control deviation variable to control variable. Therefore, it is very important in designing a stable control system to employ a transfer function that correctly represents the characteristics of the cut off frequency band of a controlled object.

According to the present invention, an approximate line is fitted to the cut off frequency band of a frequency response curve of a controlled object that shall be correct. Therefore, even a control object having specific frequency characteristics whose designing is very difficult for the conventional methods can easily, satisfactorily and reliably be designed for stable PID control system, decoupling PID control system, etc.

These and other objects, features and advantages of the present invention will be more apparent from the following detailed description of preferred embodiments in conjunction with the accompanying drawings.

## BRIEF DESCRIPTION OF THE DRAWINGS

Fig. 1 is a flowchart schematically showing the present invention;

Fig. 2 is an explanatory view showing operation of the present invention;

Fig. 3 is a block diagram showing the arrangement of a design support apparatus according to an embodiment of the present invention;

Figs. 4 to 12 are explanatory views showing frequency response curves displayed on a screen of a CRT terminal;

Fig. 13 is a block diagram showing an exemplary arrangement to which the present invention is applied;

Figs. 14(a) and 14(b) are views showing open loop response curves of flow rates and pressures of the arrangement of Fig. 13;

Figs. 15(a) and 15(b) are explanatory views showing frequency response curves of the arrangement of Fig. 13 displayed on a screen of a CRT terminal;

Fig. 16 is an explanatory view comparing stepwise responses of an obtained low degree transfer function and of a pulse transfer function;

Fig. 17 is a view showing a pressure set point variable pursuing response curve of a PID control system designed according to the CHR method with the obtained low degree transfer function; and

Figs. 18(a) and 18(b) are views showing set point variable pursuing response curves of pressures and flow rates of a decoupling PID control system designed according to the partial model matching method by obtaining a two-input two-output transfer function matrix.

## DETAILED DESCRIPTION OF THE EMBODIMENTS

Figure 3 shows a control system design support apparatus according to the embodiment of the present invention. The design support apparatus comprises a dynamic characteristic data inputting portion 2 for receiving the dynamic characteristic data of any form of a controlled object 1 directly or indirectly from a measuring apparatus; a transfer function converting portion 4 for obtaining a low degree continuous-time transfer function according to the inputted dynamic characteristic data and given operation of a CAD 3; and a control constant deciding portion 5 for deciding controller parameter based on the obtained low degree continuous-time transfer function and according to a selected control constant deciding method.

The dynamic characteristic data inputting portion 2 for receiving the dynamic characteristic data of any form comprises a transfer function inputting portion 6; a pulse transfer function inputting portion 7; a frequency response data inputting portion 8; and a pulse transfer function estimating portion 9 for receiving input and output data to estimate a pulse transfer function.

The transfer function inputting portion 6 is to receive a continuous-time transfer function G(S) expressed with the following equations:

$$G(S) = (B(S)/A(S))e^{-LS}$$
$$A(S) = a_0 + a_1 S + \ldots a_n S^n$$
$$B(S) = b_0 + b_1 S + \ldots b_m S^m \qquad (7)$$

The pulse transfer function inputting portion 7 is to receive a pulse transfer function $G(Z^{-1})$ expressed with the following equations:

$$G(Z^{-1}) = Q(Z^{-1})/P(Z^{-1})$$
$$P(Z^{-1}) = p_0 + p_1 Z^{-1} + \ldots + p_n Z^{-n}$$
$$Q(Z^{-1}) = q_0 + q_1 Z^{-1} + \ldots + q_m Z^{-m} \qquad (8)$$

The frequency response data inputting portion 8 is to receive a data sequence expressed with the following equation related to a frequency response curve of the controlled object 1, with gains $g_i$, phases $_i$ and frequencies $\omega_i$:

$\{(g_1, \psi_1, \omega_1), (g_2, \psi_2, \omega_2), \ldots, (g_N, \psi_N, \omega_N)\}$

The pulse transfer function estimating portion 9 is to receive input/output signals of the controlled object 1 in the following equation, with input signals $u^i$ and output signals $y_i$:

$\{(u_0, y_0), (u_1, y_1), \ldots, (u_N, y_N)\}$

Then, the pulse transfer function estimating portion 9 finds the pulse transfer function $G(Z^{-1})$ expressed with the equation (8) according to the least square method (refer to a scientific journal book titled "System Identification" of the Society of Instrument and Control Engineers (SICE) in Japan.

The dynamic characteristic data inputting portion 2 further comprises a transfer function estimating portion 10 for converting the inputted pulse transfer function $G(Z^{-1})$ into a continuous-time transfer function G(S) expressed with the equation (7) according to a Z-S converting method (refer to Mita, et. al.: "Problems on conversion of multivariable discrete time systems into continuous systems", Inst. Electrical Engineers, Japan, Vol 104, No. 11, pp. 273 in Japanese in 1984" by Mita and Umezu, of Electric 280 in Japanese; a switch SW1 for switching an output of the pulse transfer function inputting portion 7 and an output of the pulse transfer function estimating portion 9 from one to the other to provide the output to the transfer function estimating portion 10 as well as providing the output directly to the transfer function converting portion 4; and a switch SW2 for outputting one of outputs of the transfer function estimating portion 10 and transfer function inputting portion 6 to the transfer function converting portion 4.

In this way, the dynamic characteristic data of any form inputted to the dynamic characteristic data inputting portion 2 is outputted in the form of frequency response data ($g_i$, $\psi_i$, $\omega_i$), continuous-time transfer function G(S) or pulse transfer function $G(Z^{-1})$ to the transfer function converting portion 4.

The transfer function converting portion 4 comprises a frequency response curve estimating portion 11 that finds a frequency response curve of the controlled object 1 according to the following equations (9) to (12), when the inputted dynamic characteristic data is the continuous-time transfer function G(S) or pulse transfer function:

$G(j\omega) = G(S) |_{s = j\omega}$
(for the continuous-time transfer function) (9)

$G(j\omega) = G(Z^{-1}) |_{z = e^{j\omega\tau}}$
(for the discrete-time transfer function) (10)

where is an angular frequency, j an imaginary unit and a sampling period.

Gain characteristic $|G(j\omega)|$
$= \sqrt{X(\omega)^2 + Y(\omega)^2}$ (11)

Phase characteristics $< G(j\omega)$
$= \tan^{-1}(Y(\omega)/X(\omega))$ (12)

$(X(\omega) = Re\{G(j\omega)\}, Y(\omega) = Im\{G(j\omega)\})$

The transfer function converting portion 4 further comprises a switch SW3 for switching frequency response data from the frequency response curve estimating portion 11 and frequency response data inputting portion 8 from one to the other; a frequency response curve display controlling portion 12 for receiving an output of the switch SW3; a transfer function model storing portion 13 connected to the display controlling portion 12; a transfer function parameter deciding portion 14 also connected to the display controlling portion 12; and a switch 4 for selecting model transfer functions.

The transfer function model storing portion 13 stores approximate curves (straight lines in this embodiment) representing frequency response curves of model transfer functions expressed by the equations (4), (5) and (6).

The frequency response curve display controlling portion 12 displays the frequency response curve or frequency response data inputted through the switch SW3 on a screen of a CRT 15 of the CAD 3. At the same time, the display controlling portion 12 displays an approximate curve of a model transfer function selected by the switch SW4 from the transfer function model storing portion 13, on the CRT 15.

The transfer function parameter deciding portion 14 positions the approximate curve of the model transfer function displayed on the CRT according to operations of a keyboard 16 and a mouse 17 of the CAD 3 as described later. Then, the transfer function parameter deciding portion 14 decides parameters of the model transfer function based on the position of the approximate curve. Operation of the CAD 3 will be explained later with reference to Fig. 3 and the following figures.

The control constant deciding portion 5 receives the model transfer function from the transfer function parameter deciding portion 14 and provides the same through a switch SW 5 to a Ziegler-Nichols method operating portion 17, CHR method operating portion 18 or partial model matching method operating portion 19. The operating portions 17, 18 and 19 decide the controller parameter (KP, TI and TD).

Operation of the design support apparatus with the above-mentioned control system will be explained with reference to concrete operation examples.

Firstly, the dynamic characteristic data inputting portion 2 receives any form of input and output response data, frequency response curve data, pulse transfer function data or continuous-time transfer function data of the controlled object 1.

If it is the input and output response data, the pulse transfer function estimating portion 9 estimates a time series model, i.e., a pulse transfer function according to the least square method. The estimated pulse transfer function is converted into a continuous-time transfer function by the transfer function estimating portion 10 according to the Z-S converting method.

In this way, a pulse transfer function $G(Z^{-1})$, continuous-time transfer function G(S) or frequency response data $\{g_i, \psi_i, \omega_i\}$ (i = 1, 2, ..., N) is sent to the transfer function converting portion 4.

The transfer function converting portion 4 converts the pulse transfer function $G(Z^{-1})$ or the continuous-time transfer function G(S) into a frequency response function $G(j\omega)$($\omega$ being an angular frequency) according to the equations (9) to (12) to display frequency response curves, i.e., a gain characteristic curve and a phase characteristic curve, on the screen of the CRT 15 as shown in Fig. 4.

Meanwhile, an operator manipulates the switch SW4 to select a low degree transfer function model of type I, II or III expressed by the equation (4), (5) or (6).

If the type I is selected, a straight line a is displayed with the frequency response curves as shown in Fig. 5. The straight line a corresponds to gain characteristics of the model transfer function and is inclining by -20 dB/dec. The straight line a can be moved vertically by manipulating the mouse 17. The straight line a is adjusted to a proper position relative to the gain characteristic curve. Then, a button of the mouse 17 is clicked to read a gain $|G(j\omega_0)|$[dB] for a certain frequency $\omega_0$ at the moment. Then, the transfer function parameter deciding portion 14 decides the parameter K of the equation (4) as follows:

$K = \omega_0 \ 10 \ |G(j\omega_0)|/20$ (13)

After that, a vertical straight line b is displayed as shown in Fig. 6. The straight line b represents a certain frequency $\omega\psi$ corresponding to frequency characteristics of the model transfer function. The straight line b can be moved left and right by operating the mouse 17. The straight line b is adjusted to a desired frequency on the phase characteristic curve, and the button of the mouse 17 is clicked to read the frequency $\omega\psi$ and a phase $<G(j\omega\psi)$ [rad/sec] at the moment. Then, the transfer function parameter deciding portion 14 decides the parameter L of the equation (4) as follows:

$L = ((- <G(j\omega\psi)-(\pi/2))/(\omega\psi)$ (14)

(if L<0 then L=0)

In this way, the embodiment approximates several straight lines or curves to the gain characteristic curve among the frequency response curves of the controlled object. Based on positions of the straight lines or curves, a transfer function of minimum phase system that approximates only to the gain characteristics of the controlled object is calculated. Based on a difference between a phase characteristic curve calculated from the transfer function of minimum phase system and the original phase characteristic curve of the controlled object, a non-minimum phase component, i.e., a dead time element $e^{-LS}$ or an all-pass filter element is calculated as follows:

$$(\prod_{i=1}^{n} (1-a_i S))/(\prod_{i=1}^{n} ((1(1+a_i S))$$

The transfer function of minimum phase system and the non-minimum phase component are combined to provide a transfer function from which controller parameter are calculated.

If the type II is selected, a horizontal straight line c is displayed with the frequency response curves as shown in Fig. 7. The straight line c can be moved vertically by operating the mouse 17. The straight line c is adjusted to a proper position relative to the gain characteristic curve, and the button of the mouse 17 is clicked to read a gain $G_0$[dB] at the moment. Then, the transfer function parameter deciding portion 14 decides the parameter K of the equation (5) as follows:

$K = 10^{G0/20}$ (15)

After that, a straight line d inclined by -20 dB/dec is displayed with the frequency response curves as shown in Fig. 8. The straight line d can be moved vertically by operating the mouse 17. The straight line d is adjusted to a proper position relative to the gain characteristic curve, and the button of the mouse 17 is clicked to read an intersection frequency $\omega_c$[rad/sec]. Then, the transfer function parameter deciding portion 14 decides the parameter T of the equation (5) as follows:

$T = 1/\omega_c$ (16)

The straight lines c and d represent the gain characteristics of the model transfer function.

After that, a vertical straight line e representing a certain frequency $\omega\psi$ is displayed as shown in Fig. 9. The straight line e can be moved left and right by operating the mouse 17. The straight line e is adjusted to a required frequency on the phase characteristic curve, and the button of the mouse 17 is clicked to read the frequency $\omega\psi$ and a phase $<G(j\omega\psi)$ [rad/sec]. Then, the transfer function parameter deciding portion 14 decides the parameter L of the equation (5) as follows:

$$L = (-<G(j\omega\psi) - \tan^{-1}(T\omega\psi))/\omega\psi \qquad (17)$$

(if $L<0$ then $L=0$)

If the type III is selected, a horizontal straight line f is displayed with the frequency response curves as shown in Fig. 10. The straight line f can be moved vertically by manipulating the mouse 17. The straight line f is adjusted to a proper position relative to the gain characteristic curve, and the button of the mouse 17 is clicked to read a gain $G_0$[dB] at the moment. Then, the transfer function parameter deciding portion 14 decides the parameter K of the equation (6) as follows:

$$K = 10^{G0/20} \qquad (18)$$

After that, a straight line g inclined by -40 dB/dec is displayed with the frequency response curves as shown in Fig. 11. The straight line g can be moved vertically by manipulating the mouse 17. The straight line g is adjusted to a proper position relative to the gain characteristic curve, and the button of the mouse 17 is clicked to read an intersection frequency $\omega_c$ [rad/sec] and a gain $|G(j\omega_c)|$ at the moment. Then, the transfer function parameter deciding portion 14 decides the parameters $\omega$ and $\xi$ as follows:

$$\omega = \omega_c \qquad (19)$$

$$\xi = K/(2\ G(j\omega_c)) \qquad (20)$$

After that, a vertical straight line h representing a certain frequency $\omega\psi$ is displayed. The straight line h can be moved left and right by manipulating the mouse 17. The straight line h is adjusted to a desired frequency on the phase characteristic curve, and the button of the mouse 17 is clicked to read the frequency $\omega\psi$ and a phase $<G(j\omega\psi)$ [rad/sec] at the moment. Then, the transfer function parameter deciding portion 14 decides the parameter L of the equation (6) as follows:

$$L = \{\{-G(j\omega\psi) - \tan^{-1}[2\xi(\omega\psi/\omega)/(1-(\omega\psi/\omega)^2)]\}\}/(\omega\psi)$$

(if $L<0$ then $L=0$) (21)

Through these processes, the transfer function converting portion 4 can decide the low degree transfer function of type I, II, or III expressed with the equation (4), (5) or (6). A frequency response curve of the low degree transfer function thus decided and the original frequency response curves are both displayed on the screen of the CRT 15 so that the operator can evaluate their degree of approximation and repeatedly operate the transfer function converting portion 4 until a desired low degree transfer function is obtained.

The control constant deciding portion 5 uses the low degree transfer function of any of the equations (4) to (6) obtained by the transfer function converting portion 4 to calculate controller parameter (a proportional gain KP, an integral time TI and a derivative time TD) of a PID control system according to any one of the control system design methods, i.e., the Ziegler-Nichols method, CHR method and partial model matching method.

If the Ziegler-Nichols method is selected, the controller parameter are decided from the parameters of the low degree transfer function of type I or II as follows:

$$\begin{aligned} KP &= 1.2/KL \text{ (for type I)} \\ &= 1.2T/KL \text{ (for type II)} \\ TI &= 2L \\ TD &= 0.5L \end{aligned} \qquad \ldots\ (22)$$

If the CHR method is selected, the controller parameter are decided from the parameters of the low degree transfer function of type II as follows:

$$KP = 0.95T/KL$$

$TI = 2.4L$
$TD = 0.4L$ (23)

If the partial model matching method is selected, the transfer function of type I, II or III is converted into the following form:

$G(S) = 1/(g_0 = g_1 S + g_2 S^2 + ...)$ (24)

For example, for the type I, the conversion will be as follows:

$g_0 = 0$
$g_1 = l/k$
$g_2 = L/K$
$g_3 = L^2/(2K)$ (25)

For the type II, the conversion will be as follows:

$g_0 = l/K$
$g_1 = (L + T)/K$
$g_2 = (L^2/2 + TL)/K$
$g_3 = (L^3/6 + TL^2/2)/K$ (26)

For the type III, the conversion will be as follows:

$g_0 = l/k$
$g_1 = (L + 2\zeta/\omega)/K$
$g_2 = (L^2/2 + TL)/K$
$g_3 = (L^3/6 + TL^2/2)/K$ (27)

Supposing

$\alpha_2 = 0.5$
$\alpha_3 = 0.15$
$\alpha_4 = 0.03$ (28)

and

$\sigma = (g_3\alpha_3)/(g_2\alpha_4)$
$k = g_2/(\alpha_3\sigma_3)$
$f_1 = k\alpha_2\sigma^2 - g_1$
$f_0 = k\sigma - g_0$ (29)

then the controller parameter are decided as follows:

$KP = f_0$
$TI = f_0/k$
$TD = f_1/f_0$ (30)

The partial model matching method can be employed in designing a decoupling control system for a multivariate process or in designing a digital control system. In this case, the similar processes are carried out to find a low degree transfer function model for each element of dynamic characteristic model (for example, a pulse transfer function matrix) of multiple-input-output process. The low degree transfer function model is converted into the form of equation (24) to obtain controller parameter according to a corresponding method (for example, Y. Mori and T. Shigemasa, T. Kitamori: "A design method for sampled data decoupled control systems with multirate sampling periods," IFAC 7th conference on digital computer applications to process control, pp. 671 (1985).

The embodiment explained in the above is provided with the transfer function estimating portion 10 and frequency response curve estimating portion 11 to convert the dynamic characteristics of a controlled object that may take a form of pulse transfer function, high degree continuous-time transfer function or frequency response curve, into a transfer function of specific form.

In addition, the embodiment employs the Ziegler-Nichols method, CHR method and partial model matching method to easily design a control system such as a PID control system for a controlled object of any frequency response characteristic.

Further, the embodiment allows an operator to watch the frequency characteristic curve of a controlled object to approximate simple linear diagrams to an appropriate frequency band of the frequency characteristic curve. Therefore, a low degree transfer function that accurately approximates to characteristics of the cut off frequency band of the controlled object which is very important in designing a control system for the controlled object, is obtainable. In this way, the embodiment can design a stable control system and widen an applicable range of the control system design methods for various controlled objects.

Particularly when a controlled object involves a complicated frequency characteristic curve, the invention can select an important frequency band on the curve according to characteristics of the controlled object in performing approximation of the frequency characteristic curve. As a result, a desired transfer function is obtainable.

The embodiment uses the CAD 3 equipped with the CRT 15 and mouse 17 to fit the approximate curves a, b, c, etc., of a model transfer function to an original frequency response curve. Therefore, the fitting work is carried out visually and easily to complete the work correctly and quickly.

The approximate curves are adjusted to desired positions in an cut-off frequency band of the original frequency response curve as shown in Fig. 2 to obtain a low degree transfer function that accurately approximates to the characteristics of the cut-off frequency band of the controlled object. The cut-off frequency band of the controlled object is very important in designing a stable control system.

A concrete example of design according to the invention will be explained with reference to Fig. 13 and the following figures.

Figure 13 is an explanatory view showing a control system of the flow rates and pressures of a fluid process which is a controlled object.

As shown in the figure, the control system feeds fluid to a first tank 21 through a pressure control valve 20, and feeds the fluid in the first tank 21 to a second tank 24 via a flow meter 22 and a flow adjusting valve 23. The first tank 21 is equipped with a pressure gauge 25.

The pressure control valve 20 and flow control valve 23 receive manipulating variables U1 and U2, respectively. The pressure gauge 25 and flow meter 22 provide controlled variable Y1 and Y2, respectively.

Figures 14(a) and 14(b) show pressure and flow rate response curve with respect to stepwise changes of the pressure control valve 20 and flow control valve 23. The figures show that the process demonstrates strong inter connection between the detected flow rate Y2 and the detected pressure Y1.

In the process of Fig. 13, the signal U1 representing an opening and pressure signal Y1 of the pressure control valve 20 are measured. Then, the pulse transfer function estimating portion 9 finds a pulse transfer function $G_{11}(Z^{-1})$ according to the least square method. The frequency response curve estimating portion 11 finds a frequency response curve. The frequency response curve and an approximate curve of a selected model transfer function of, for example, type II corresponding to the frequency response curve are displayed on the screen of the CRT 15 under the control of the frequency response curve display controlling portion 12, as shown in Figs. 14(a) and 14(b).

The mouse 17 is manipulated to decide positions of straight lines c, d and e. Then, the transfer function parameter deciding portion 14 decides the model transfer function of type II as follows:

$$G_{11}(S) = (2.7826)/(1+28.91S)/e^{-1.138S} \qquad (31)$$

Figure 15(b) shows the original frequency response curve and a frequency response curve calculated from the obtained transfer function $G_{11}(S)$. It is apparent that low and intermediate frequency bands of them are well matching with each other. Figure 16 shows stepwise responses of the original pulse transfer function $G_{11}(Z^{-1})$ and the obtained transfer function $G_{11}(S)$. They are substantially matching with each other. Namely, the obtained low degree transfer function correctly preserves the characteristics of the original process.

The CHR method is applied for the equation (31) to find PID controller parameter. Figure 17 shows responses (with set point variables changing) of the pressure control system adjusting the PID control parameters. It is clear in the figure that a stable and excellent control performance is realized with less overshooting.

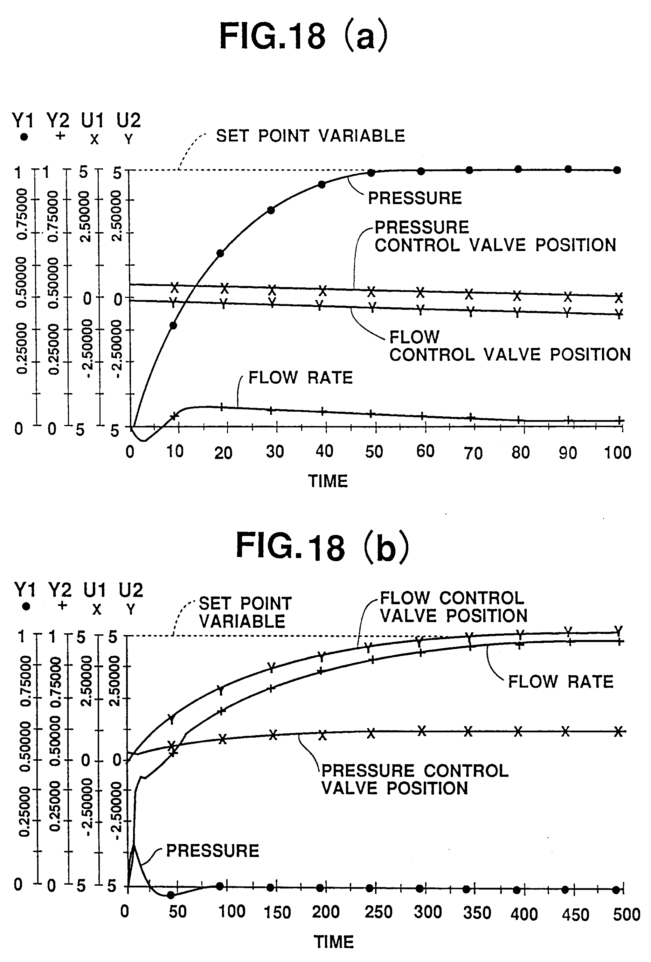

With the same sequences as those mentioned in the above, pressure and flow rate characteristics of the valves 20 and 23 are estimated as a transfer function matrix of two-input two-output system, and the partial model matching method is employed to design a PID control system. Pursuing responses of pressure and flow rate, set-point variables of the PID control system are shown in Figs. 18(a) and 18(b). As shown in the figures, the flow rates fluctuate only a little when the pressures vary, and the pressures fluctuate only a little when the flow rates vary, because internal interference is suppressed by the decoupling PID control system. In each case, a good control performance is achieved.

In the above-mentioned embodiment, approximate curves representing a model of low degree transfer function have been the straight lines a, b, c, etc. These straight lines may be substituted by curves to provide the same effect. Alternatively, straight lines and arcs may be combined. Namely, any line is acceptable if it can approximate the cut-off frequency band of an inputted frequency response curve as shown in Fig. 2.

The embodiment has employed three models of low degree transfer functions and three control constant deciding methods. However, the invention is not limited by them but may employ various models and control parameters deciding methods.

This embodiment may however be adapted to achieve a fully automatic operation by means of a computer. In the above, the various curves and lines are moved by means of a mouse and a decision of best fit then made. Such a procedure can be automated. The fitting of the one curve to another curve may be carried out depending on fitting conditions such as that the one curve approaches or contacts the second curve. Alternatively, the differences between the two curves may be calculated and mathematically analysed to obtain an error function which is then minimised by adjustment of the relative positions of the two curves. Such minimising and error function generating techniques are well known in the art (e.g. least squares fit). Further, each one of the various control methods (Ziegler-Nichhols, CHR or Partial Model Matching) may be taken in turn and the results compared in order to select the best fit. These operations may be carried out by a suitably programmed computer.

In this way, the invention can be achieved in various forms without departing from the spirit of the invention.

In summary, the control system design method and design support apparatus of the invention find a model of a desired transfer function based on dynamic characteristic data of any form inputted from a controlled object, and use a desired control constant deciding method to readily and quickly design a reliable control system for the controlled object. The present invention is able to provide controlled objects of different characteristics with stable control systems.

**Claims**

**1.** A design support apparatus for obtaining controller parameter of control parameters of a control system according to characteristic data of the controlled object, comprising:

(a) frequency response curve forming means for forming an original frequency response curve of the controlled object according to the dynamic characteristic data of the controlled object; characterized by

(b) model selecting means for selecting one of a plurality of transfer function models, the transfer function model being low degree transfer functions prepared in advance to approximate original frequency response curves of controlled objects respectively;

(c) approximate curve moving means for moving an approximate curve which corresponds to a frequency response curve representing one of the transfer function models, toward and away from the original frequency response curve and for fitting to the original frequency response curve;

(d) parameter deciding means for deciding parameters of the selected model transfer function according to the fixed position of the approximate curve fitted to the original frequency response curve;

(e) control parameters deciding method selecting means for selecting one of control parameters deciding methods prepared in advance; and

(f) control parameters deciding means for deciding the control parameters based on the selected transfer function model whose parameters have been decided.

**2.** The apparatus as claimed in claim 1, wherein the dynamic characteristic data of the controlled object is at least one of continuous-time transfer function, pulse transfer function, frequency response data and input/output signal data of the controlled object.

**3.** The apparatus as claimed in claim 1, wherein said approximate curve moving means comprises a computer aided design apparatus having a display screen for displaying the original frequency response curve as well as the approximate curve and a mouse for moving the approximate curve toward and away from to fit to the original frequency response curve on the display screen.

**4.** The apparatus as claimed in claim 2, wherein the model transfer functions are $G_1(S)$, $G_2(S)$ and $G_3(S)$ expressed with the following equations:

$$G_1(S) = (K/L)e^{-LS}$$
$$G_2(S) = (K/(1+TS))e^{-LS}$$
$$G_3(S) = (K/(1+2\xi S/\omega + S^2/\omega^2))e^{-LS}$$

where S is a Laplace operator, K a gain, L a dead time, T a time constant and $\xi$ and $\omega$ parameters related to a second degree system.

**5.** The apparatus as claimed in claim 2, wherein the control parameters deciding methods are Ziegler-Nichols method, CHR method and partial model matching method, one of the methods being selected to calculate control parameters of one of PID (proportional integral derivative) control system and a decoupling PID control system.

**6.** The apparatus as claimed in claim 2, wherein the approximate curve is formed by combining a straight line horizontal to a frequency axis, a straight line vertical to the horizontal straight line and a straight line inclined by one of -20 dB and -40 dB to the horizontal straight line.

**7.** A control system design method for obtaining control parameters of a control system of a controlled object according to dynamic characteristic data of the controlled object, comprising the steps of:

(a) forming an original frequency response curve of the controlled object according to the dynamic characteristic data of the controlled object, the dynamic characteristic data being one of continuous-time transfer function, pulse transfer function, frequency response data and input/output signal data of the controlled object;characterized by

(b) selecting one of transfer function models, the models being low degree transfer functions prepared in advance to express original frequency response curves of controlled objects respectively;

(c) moving an approximate curve which corresponds to a frequency response curve representing the selected transfer function model, toward and away in order to fit the original frequency response curve and fixing a position of the approximate curve;

(d) deciding parameters of the selected model transfer function according to the fixed position of the approximate curve;

(e) selecting one of control parameters deciding methods prepared in advance; and

(f) deciding the control parameters based on the selected model transfer function whose parameters have been decided and according to the selected control parameters deciding method.

**8.** The method as claimed in claim 7, wherein the model transfer functions are $G_1(S)$, $G_2(S)$ and $G_3(S)$ expressed with the following equations:

$$G_1(S) = (K/L)e^{-LS}$$
$$G_2(S) = (K/(1+TS))e^{-LS}$$
$$G_3(S) = (K/(1+2\xi S/\omega + S^2\omega^2))e^{-LS}$$

where S is a Laplace operator, K a gain, L a dead time, T a time constant and $\xi$ and $\omega$ parameters related to a second order system.

**9.** The method as claimed in claim 7, wherein the control parameters deciding methods are Ziegler-Nichols method, CHR method and partial model matching method, one of the methods being selected to calculate control parameters of one of PID (proportional integral derivative) control system and a decoupling PID control system.

**10.** The method as claimed in claim 7, wherein the approximate curve is formed by combining a straight line horizontal to a frequency axis, a straight line vertical to the horizontal straight line and a straight line inclined by one of -20 dB and -40 dB to the horizontal straight line.

## Patentansprüche

1. Eine Entwurfsunterstützungs-Vorrichtung zur Ermittlung von Steuerungseinrichtungs-Parameter von Steuerungsparametern eines Steuerungssystems gemäß charakteristischer Daten des gesteuerten Objekts, umfassend:
   (a) eine Frequenzgangkurven-Bildungseinrichtung zur Bildung einer ursprünglichen Frequenzgangkurve des gesteuerten Objekts gemäß der dynamischen charakteristischen Daten des gesteuerten Objekts;
   **gekennzeichnet** durch
   (b) eine Modell-Wähleinrichtung zum Wählen einer einer Vielzahl von Übertragungsfunktionsmodellen, wobei das Übertragungsfunktionsmodell vorher erstellte Übertragungsfunktionen mit niedrigem Grad ist, um jeweils ursprüngliche Frequenzgangkurven von gesteuerten Objekten zu approximieren;
   (c) eine Näherungskurven-Bewegungseinrichtung zur Bewegung einer Näherungskurve, die einer Frequenzgangkurve entspricht, die eine der Übertragungsfunktinsmodelle darstellt, auf die ursprüngliche Frequenzgangkurve hin oder davon weg und zur Anpassung auf die ursprüngliche Frequenzgangkurve;
   (d) eine Parameter-Bestimmungseinrichtung zur Bestimmung von Parametern der gewählten Modell-Übertragungsfunktion gemäß der festgelegten Position der Näherungskurve, die auf die ursprüngliche Frequenzgangkurve angepaßt ist;
   (e) eine Wähleinrichtung für Steuerungsparameter-Bestimmungsverfahren, zum Auswählen einer der Steuerungsparameter-Bestimmungsverfahren, die vorher erstellt wurden; und
   (f) eine Bestimmungseinrichtung für Steuerungsparameter, zur Bestimmung der Steuerungsparameter auf Grundlage des gewählten Übertragungsfunktionsmodells, dessen Parameter bestimmt worden sind.

2. Die Vorrichtung nach Anspruch 1,
   **dadurch gekennzeichnet, daß**
   die dynamischen charakteristischen Daten des gesteuerten Objekts eine zeitkontinuierliche Übertragungsfunktion und/oder eine Impuls-Übertragungsfunktion und/oder Frequenzgangdaten und/oder Eingangs/Ausgangs-Signaldaten des gesteuerten Objekts sind.

3. Die Vorrichtung nach Anspruch 1,
   **dadurch gekennzeichnet, daß**
   die Näherungskurven-Bewegungseinrichtung eine rechnergestützte Entwurfsvorrichtung umfaßt, die einen Anzeigeschirm zum Anzeigen der ursprünglichen Frequenzgangkurve sowie der Näherungskurve und eine Maus, um die Näherungskurve zur Anpassung auf die ursprüngliche Frequenzgangkurve auf dem Anzeigeschirm hin- und herzubewegen, aufweist.

4. Die Vorrichtung nach Anspruch 2,
   **dadurch gekennzeichnet, daß**
   die Modell-Übertragungsfunktionen die mit den folgenden Gleichungen ausgedrückten Funktionen $G_1(S)$, $G_2(S)$ und $G_3(S)$ sind:

   $$G_1(S) = (K/L)e^{-LS}$$
   $$G_2(S) = (K/(1+TS))e^{-LS}$$
   $$G_3(S) = (K/(1+2\xi S/\omega + S^2/\omega^2))e^{-LS}$$

   wobei S ein Laplace-Operator, K eine Verstärkung, L eine Totzeit, T eine Zeitkonstante und $\xi$ und $\omega$ Parameter sind, die sich auf ein System zweiten Grades beziehen.

5. Die Vorrichtung nach Anspruch 2,
   **dadurch gekennzeichnet, daß**
   die Steuerungsparameter-Bestimmungsverfahren das Ziegler-Nichols-Verfahren, das CHR-Verfahren und das Teilmodell-Anpassungverfahren umfassen, wobei eines der Verfahren gewählt wird, um Steuerungsparameter eines PID (proportionalen, integralen, differentiellen) Steuerungssystems und eines entkoppelnden PID-Steuerungssystems zu berechnen.

6. Die Vorrichtung nach Anspruch 2,
**dadurch gekennzeichnet, daß**
die Näherungskurve durch Kombination einer horizontal zur Frequenzachse ausgerichteten geraden Linie, einer vertikal zu der horizontalen geraden Linie ausgerichteten geraden Linie und einer um -20 dB oder -40dB gegenüber der horizontalen geraden Linie geneigten gerade Linie gebildet wird.

7. Ein Steuerungssystem-Entwurfsverfahren zur Ermittlung von Steuerungsparametern eines Steuerungssystems eines gesteuerten Objekts gemäß von dynamischen charakteristischen Daten des gesteuerten Objekts, umfassend die folgenden Schritte:
(a) Bilden einer ursprünglichen Frequenzgangkurve des gesteuerten Objekts gemäß der dynamischen charakteristischen Daten des gesteuerten Objekts, wobei die dynamischen charakteristischen Daten entweder eine zeitkontinuierliche Übertragungsfunktion, eine Impuls-Übertragungsfunktion, Frequenzgangdaten oder Eingangs/Ausgangs-Signaldaten des gesteuerten Objekts sind;
gekennzeichnet durch die folgenden Schritte:
(b) Wählen eines von Übertragungsfunktionsmodellen, wobei die Modelle vorher erstellte Übertragungsfunktion niedrigen Grades sind, um jeweils ursprüngliche Frequenzgangkurven der gesteuerten Objekte auszudrücken;
(c) Bewegen einer Näherungskurve, die einer Frequenzgangkurve entspricht, die das gewählte Übertragungsfunktionsmodell darstellt, hin und her, um sie auf die ursprüngliche Frequenzgangkurve anzupassen und Festlegen einer Position der Näherungskurve;
(d) Bestimmen von Parametern der gewählten Modell-Übertragungsfunktion gemäß der festgelegten Position der Näherungskurve;
(e) Wählen eines von vorher erstellten Steuerungsparameter-Bestimmungsverfahren; und
(f) Bestimmen der Steuerungsparameter auf Grundlage der gewählten Modell-Übertragungsfunktion, deren Parameter bestimmt worden sind und gemäß des gewählten Steuerungsparameter-Bestimmungsverfahren.

8. Das Verfahren nach Anspruch 7,
**dadurch gekennzeichnet, daß**
die Modell-Übertragungsfunktionen die mit den folgenden Gleichungen ausgedrückten Funktionen $G_1$-(S), $G_1$(S) und $G_1$(S) sind:

$$G_1(S) = (K/L)e^{-LS}$$
$$G_2(S) = (K/(1+TS))e^{-LS}$$
$$G_3(S) = (K/(1+2\xi S/\omega + S^2\omega^2))e^{-LS}$$

wobei S eine Laplace-Operator, K eine Verstärkung, L eine Totzeit, T eine Zeitkonstante und $\xi$ und $\omega$ Parameter in Bezug auf ein System zweiter Ordnung sind.

9. Das Verfahren nach Anspruch 7,
**dadurch gekennzeichnet, daß**
die Steuerungsparameter-Bestimmungsverfahren das Ziegler-Nichols-Verfahren, das CHR-Verfahren und das Teilmodell-Anpassungsverfahren sind, wobei eines dieser Verfahren gewählt wird, um Steuerungsparameter entweder eines PID (proportionalen-integralen-differentiellen) Steuerungssystems oder eines entkoppelnden PID-Steuerungssystems zu berechnen.

10. Das Verfahren nach Anspruch 7,
**dadurch gekennzeichnet, daß**
die Näherungskurve durch Kombination einer zu einer Frequenzachse horizontalen geraden Linie, einer vertikal zu der horizontalen geraden Linie ausgerichteten geraden Linie und eine um entweder -20 dB oder -40 dB zu der horizontalen geraden Linie geneigten geraden Linie gebildet wird.

**Revendications**

1. Appareil d'assistance à la conception afin d'obtenir un paramètre de contrôleur pour des paramètres de commande d'un système de commande conformément à une donnée caractéristique de l'objet commandé, comprenant :

(a) un moyen de formation de courbe de réponse en fréquence afin de former une courbe de réponse en fréquence d'origine de l'objet commandé conformément à la donnée caractéristique dynamique de l'objet commandé; caractérisé par :

(b) un moyen de sélection de modèle afin de choisir l'un d'une multitude de modèles de fonction de transfert, le modèle de fonction de transfert étant des fonctions de transfert de faible degré préparées à l'avance de courbes approchées de réponse en fréquence d'origine des objets commandés, respectivement;

(c) un moyen de déplacement de courbe approchée pour déplacer une courbe approchée qui correspond à une courbe de réponse en fréquence représentant l'un des modèles de la fonction de transfert, pour la rapprocher et pour l'éloigner de la courbe de réponse en fréquence d'origine et pour l'adapter à la courbe de réponse en fréquence d'origine;

(d) un moyen de prise de décision sur des paramètres afin de décider des paramètres de la fonction de transfert du modèle sélectionné conformément à la position fixe de la courbe approchée adaptée à la courbe de réponse en fréquence d'origine;

(e) un moyen de sélection de procédé de prise de décision sur des paramètres de commande afin de sélectionner l'un de procédés de prise de décision sur des paramètres de commande préparés à l'avance; et

(f) un moyen de prise de décision sur des paramètres de commande afin de choisir les paramètres de commande sur la base du modèle sélectionné de la fonction de transfert dont les paramètres ont fait l'objet d'une prise de décision.

2. Appareil selon la revendication 1, dans lequel la donnée caractéristique dynamique de l'objet commandé est au moins une fonction de transfert en temps continu, ou une fonction de transfert d'impulsions, ou une donnée de réponse en fréquence ou une donnée d'un signal d'entrée/sortie de l'objet commandé.

3. Appareil selon la revendication 1, dans lequel ledit moyen de déplacement de courbe approchée comprend un dispositif de conception assistée par ordinateur ayant un écran d'affichage afin d'afficher la courbe de la réponse en fréquence d'origine ainsi que la courbe approchée et une souris pour déplacer la courbe approchée afin de la rapprocher ou de l'éloigner et permettre l'adaptation à la courbe de réponse en fréquence d'origine sur l'écran d'affichage.

4. Appareil selon la revendication 2, dans lequel les fonctions de transfert de modèle sont $G_1(S)$, $G_2(S)$ et $G_3(S)$ exprimées par les équations suivantes :

$$G_1(S) = (K/L)e^{-LS}$$
$$G_2(S) = [K/(1+TS)]e^{-LS}$$
$$G_3(S) = [K/(1+2\xi S/\omega + S^2/\omega^2)]e^{-LS}$$

dans lesquelles S est un opérateur de Laplace, K un gain, L un temps mort, T une constante de temps et $\xi$ et $\omega$ des paramètres liés à un système du second degré.

5. Appareil selon la revendication 2, dans lequel les procédés de prise de décision sur des paramètres de commande sont le procédé de Ziegler-Nichols, le procédé CHR et le procédé d'adaptation de modèle partielle, l'un des procédés étant choisi pour calculer les paramètres de commande d'un système de commande PID (proportionnel, intégral, par différentiation) ou d'un système de commande PID à découplage.

6. Appareil selon la revendication 2, dans lequel la courbe approchée est formée en combinant une ligne droite horizontale par rapport à un axe de fréquence, une ligne droite verticale par rapport à la ligne droite horizontale et une ligne droite inclinée de -20 dB ou de -40 dB par rapport à la ligne droite horizontale.

7. Procédé de conception d'un système de commande afin d'obtenir des paramètres de commande d'un système de commande d'un objet commandé selon une donnée caractéristique dynamique de l'objet commandé, comprenant les étapes consistant à :

(a) former une courbe de réponse en fréquence d'origine de l'objet commandé conformément à la donnée caractéristique dynamique de l'objet commandé, la donnée caractéristique dynamique étant une fonction de transfert en temps continu, ou une fonction de transfert d'impulsions, ou une donnée de réponse en fréquence ou une donnée de signal d'entrée/sortie de l'objet commandé; caractérisé par les étapes consistant à :

(b) sélectionner l'un de modèles de fonction de transfert, les modèles étant des fonctions de transfert de faible degré préparées à l'avance afin d'exprimer des courbes de réponse en fréquence d'origine d'objets commandés, respectivement;

(c) déplacer une courbe approchée qui correspond à une courbe de réponse en fréquence représentant le modèle de fonction de transfert sélectionné, pour la rapprocher et pour l'éloigner dans le but de l'adapter à la courbe de réponse en fréquence d'origine et fixer une position de la courbe approchée;

(d) décider des paramètres de la fonction de transfert du modèle sélectionné en conformité avec la position fixe de la courbe approchée;

(e) sélectionner l'un des procédés de prise de décision sur des paramètres de commande, préparés à l'avance; et

(f) décider des paramètres de commande sur la base de la fonction de transfert du modèle sélectionné dont les paramètres ont fait l'objet d'une prise de décision et en conformité' avec le procédé sélectionné de prise de décision sur des paramètres de

commande.

**8.** Procédé selon la revendication 7, dans lequel les fonctions de transfert de modèle sont $G_1(S)$, $G_2(S)$ et $G_3(S)$ exprimées par les équations suivantes :

$$G_1(S) = (K/L)e^{-LS}$$
$$G_2(S) = [K/(1+TS)]e^{-LS}$$
$$G_3(S) = [K/(1+2\xi S/\omega + S^2/\omega^2)]e^{-LS}$$

où S est un opérateur de Laplace, K un gain, L un temps mort, T une constante de temps et $\xi$ et $\omega$ des paramètres liés à un système du second ordre.

**9.** Appareil selon la revendication 7, dans lequel les procédés de prise de décision sur des paramètres de commande sont un procédé de Ziegler-Nichols, un procédé CHR et un procédé d'adaptation de modèle partielle, l'un des procédés étant choisi pour calculer des paramètres de commande d'un système de commande PID (proportionnel, intégral, par différentiation) ou d'un système de commande PID à découplage.

**10.** Procédé selon la revendication 7, dans lequel la courbe approchée est formée en combinant une ligne droite horizontale par rapport à un axe de fréquence, une ligne droite verticale par rapport à la ligne droite horizontale et une ligne droite inclinée de -20 dB ou de -40 dB par rapport à la ligne droite horizontale.

FIG.1

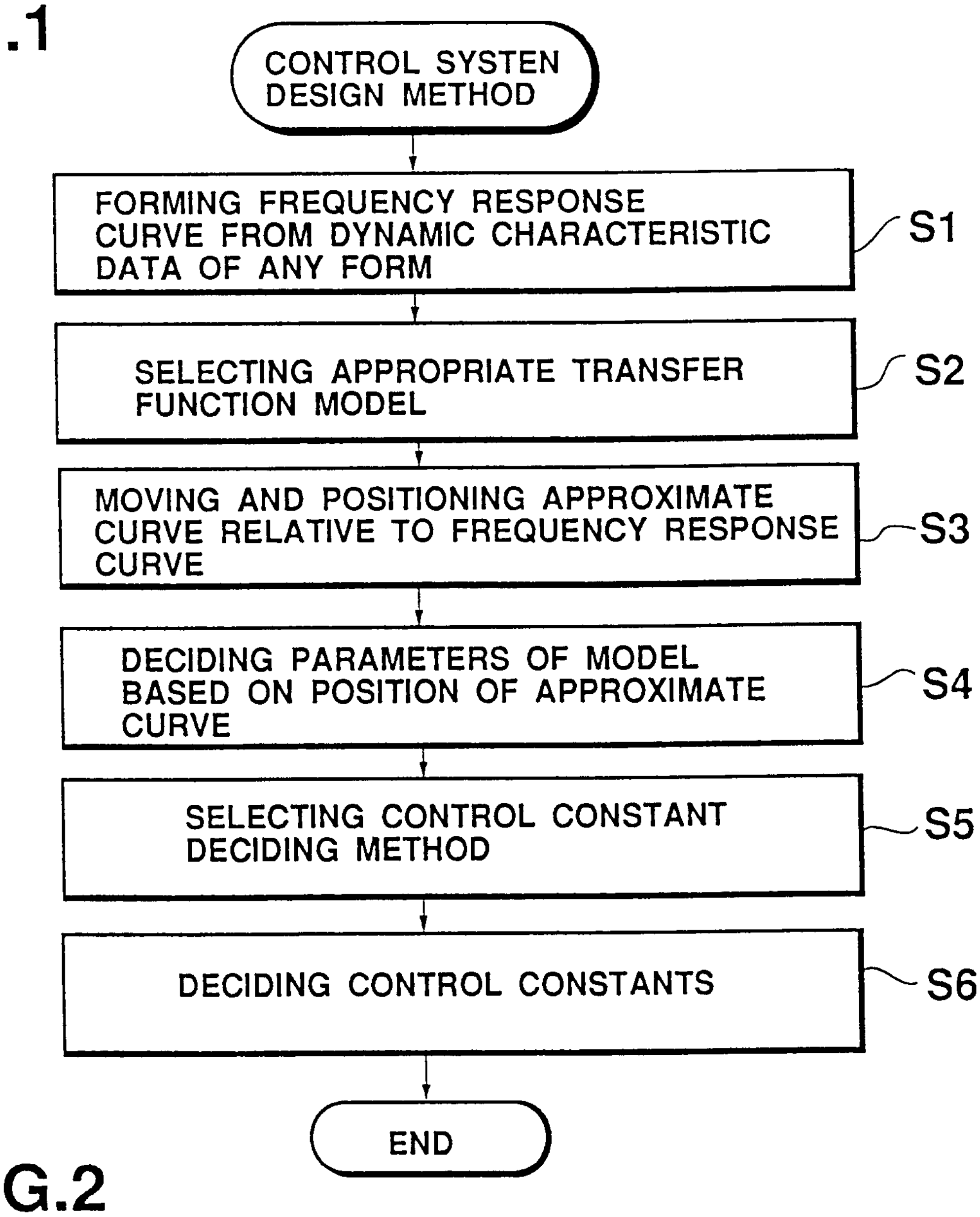
CONTROL SYSTEN DESIGN METHOD
FORMING FREQUENCY RESPONSE CURVE FROM DYNAMIC CHARACTERISTIC DATA OF ANY FORM
S1
SELECTING APPROPRIATE TRANSFER FUNCTION MODEL
S2
MOVING AND POSITIONING APPROXIMATE CURVE RELATIVE TO FREQUENCY RESPONSE CURVE
S3
DECIDING PARAMETERS OF MODEL BASED ON POSITION OF APPROXIMATE CURVE
S4
SELECTING CONTROL CONSTANT DECIDING METHOD
S5
DECIDING CONTROL CONSTANTS
S6
END

FIG.2

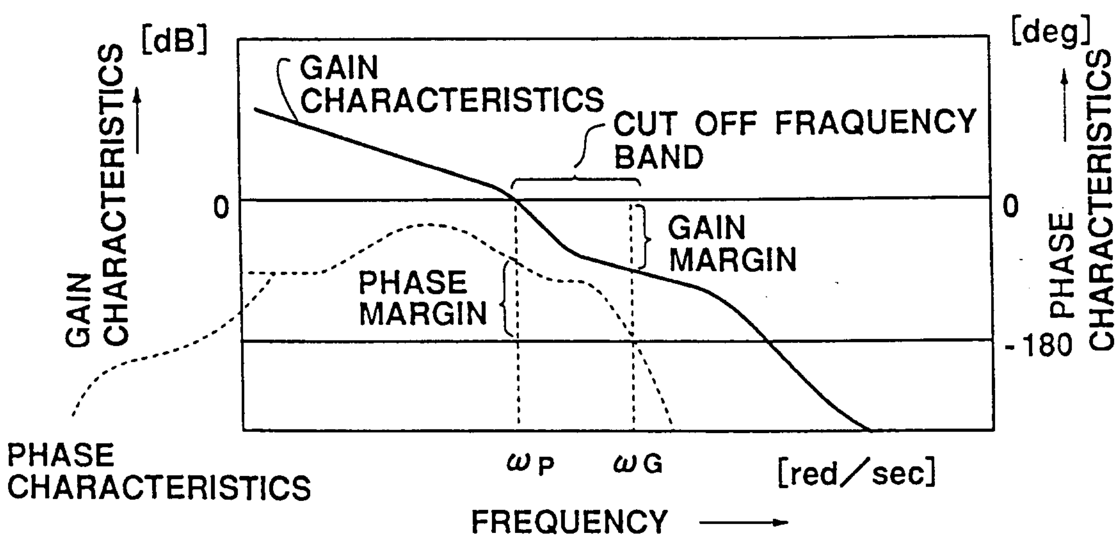
GAIN CHARACTERISTICS
[dB]
0
GAIN CHARACTERISTICS
CUT OFF FRAQUENCY BAND
GAIN MARGIN
PHASE MARGIN
[deg]
0
-180
PHASE CHARACTERISTICS
PHASE CHARACTERISTICS
ω P
ω G
[red/sec]
FREQUENCY

FIG.3

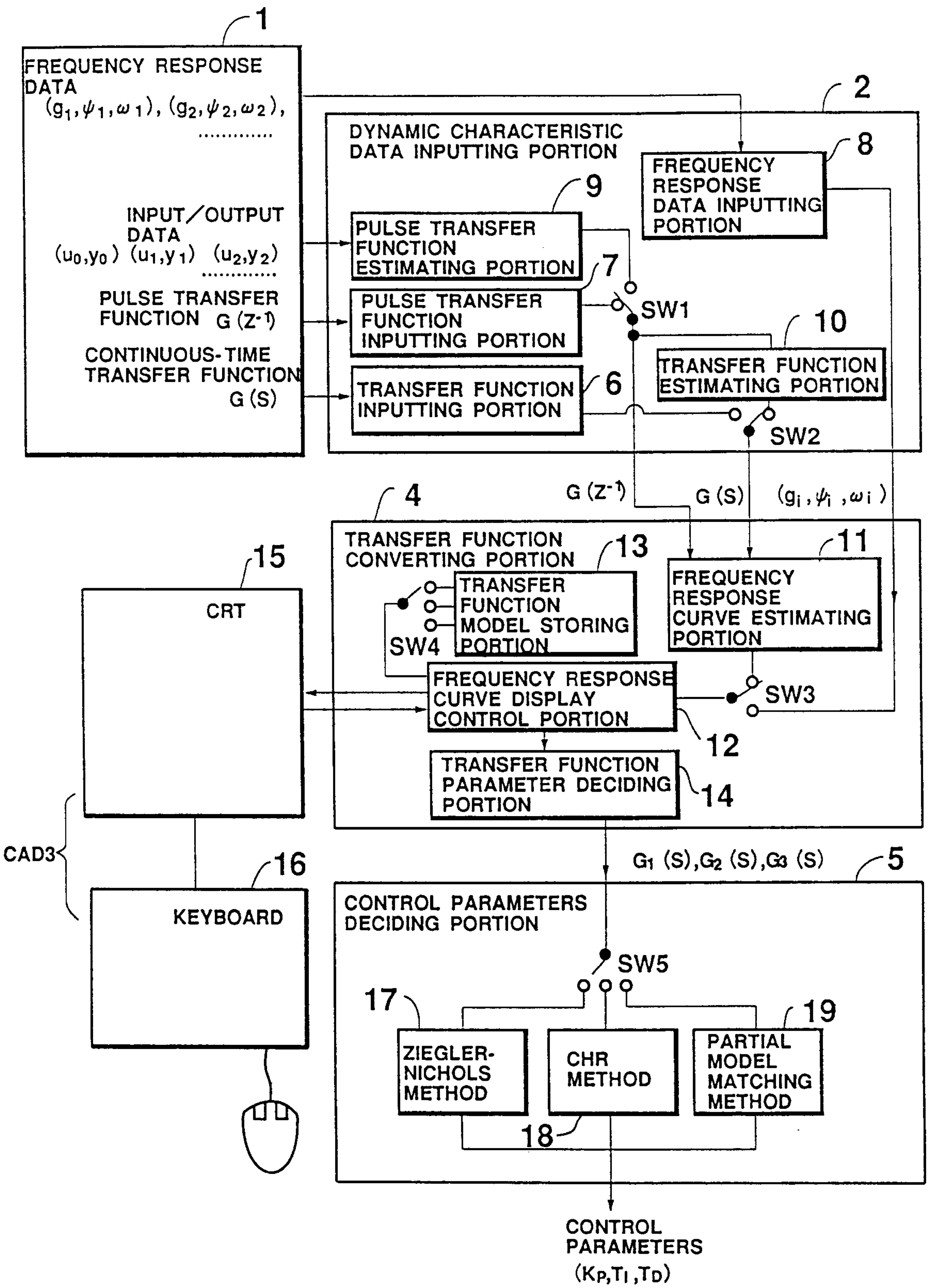
1
FREQUENCY RESPONSE DATA
$(g_1, \psi_1, \omega_1), (g_2, \psi_2, \omega_2)$, ............
INPUT/OUTPUT DATA
$(u_0, y_0)$ $(u_1, y_1)$ $(u_2, y_2)$ ............
PULSE TRANSFER FUNCTION $G(Z^{-1})$
CONTINUOUS-TIME TRANSFER FUNCTION $G(S)$
2
DYNAMIC CHARACTERISTIC DATA INPUTTING PORTION
8
FREQUENCY RESPONSE DATA INPUTTING PORTION
9
PULSE TRANSFER FUNCTION ESTIMATING PORTION
7
PULSE TRANSFER FUNCTION INPUTTING PORTION
SW1
10
TRANSFER FUNCTION ESTIMATING PORTION
6
TRANSFER FUNCTION INPUTTING PORTION
SW2
4
$G(Z^{-1})$
$G(S)$
$(g_i, \psi_i, \omega_i)$
TRANSFER FUNCTION CONVERTING PORTION
13
11
15
CRT
TRANSFER FUNCTION MODEL STORING PORTION
SW4
FREQUENCY RESPONSE CURVE ESTIMATING PORTION
FREQUENCY RESPONSE CURVE DISPLAY CONTROL PORTION
SW3
12
TRANSFER FUNCTION PARAMETER DECIDING PORTION
14
CAD3
16
$G_1(S), G_2(S), G_3(S)$
5
KEYBOARD
CONTROL PARAMETERS DECIDING PORTION
SW5
17
19
ZIEGLER-NICHOLS METHOD
CHR METHOD
PARTIAL MODEL MATCHING METHOD
18
CONTROL PARAMETERS
$(K_P, T_I, T_D)$

FIG.4

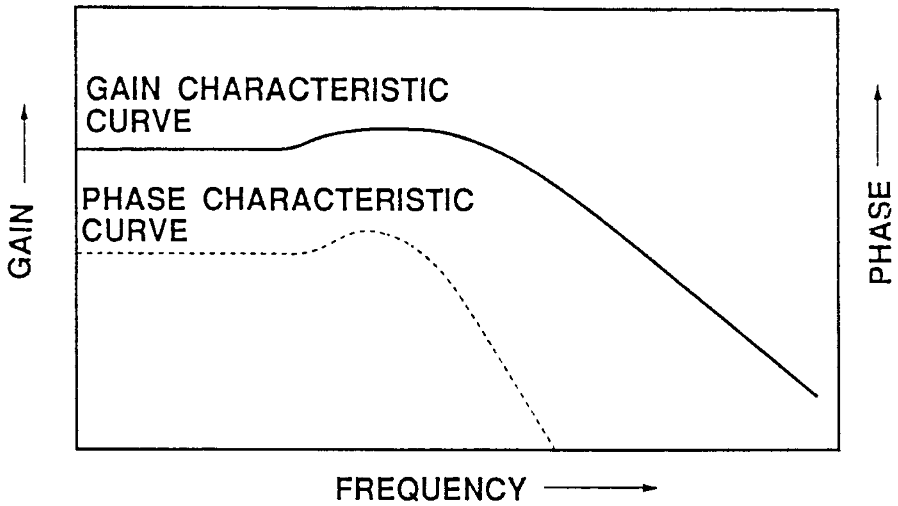


FIG.5

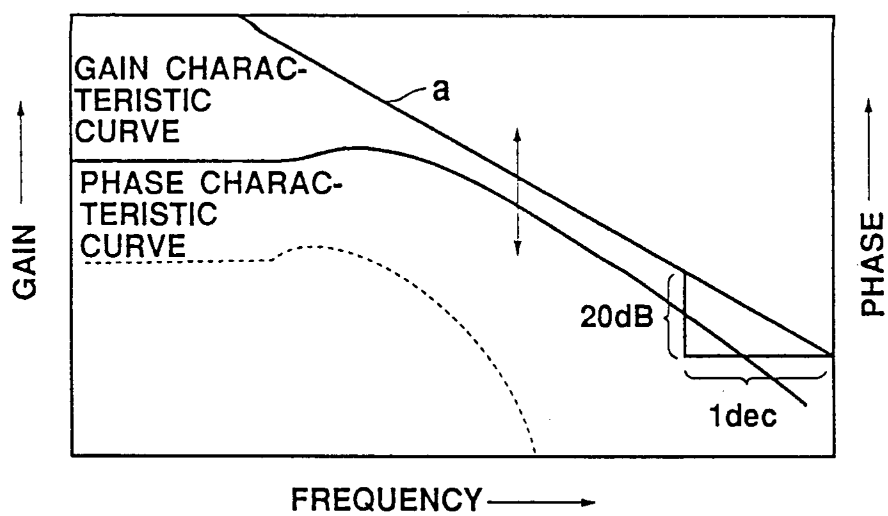


FIG.6

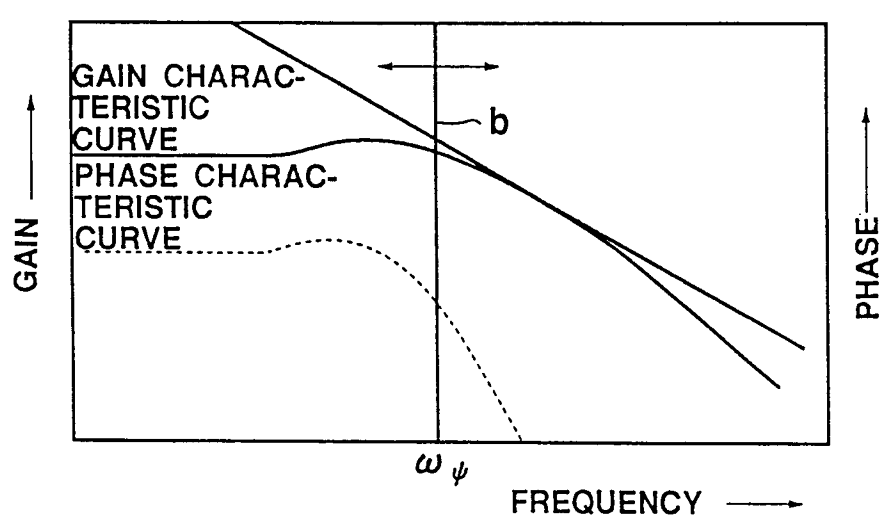

FIG.7

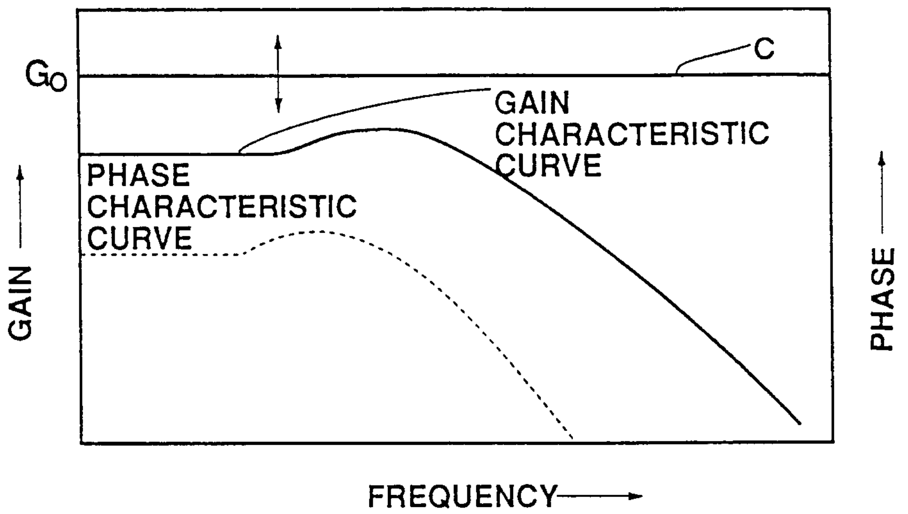


FIG.8

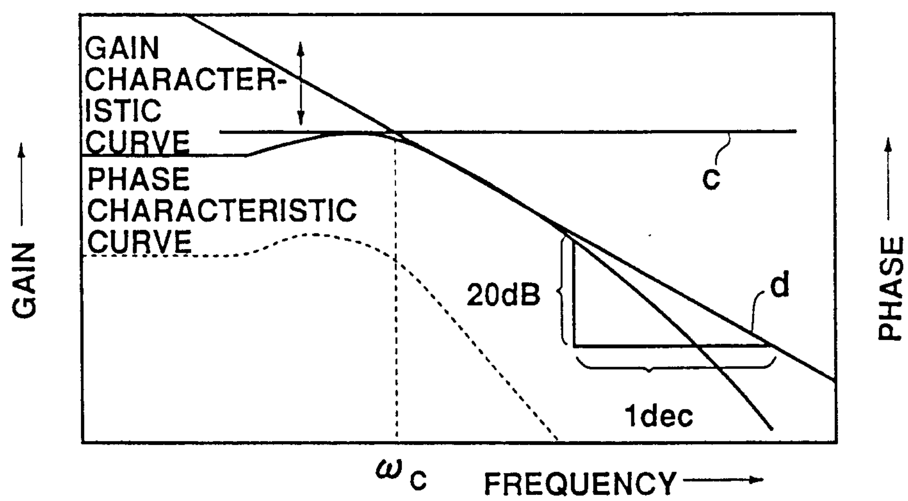


FIG.9

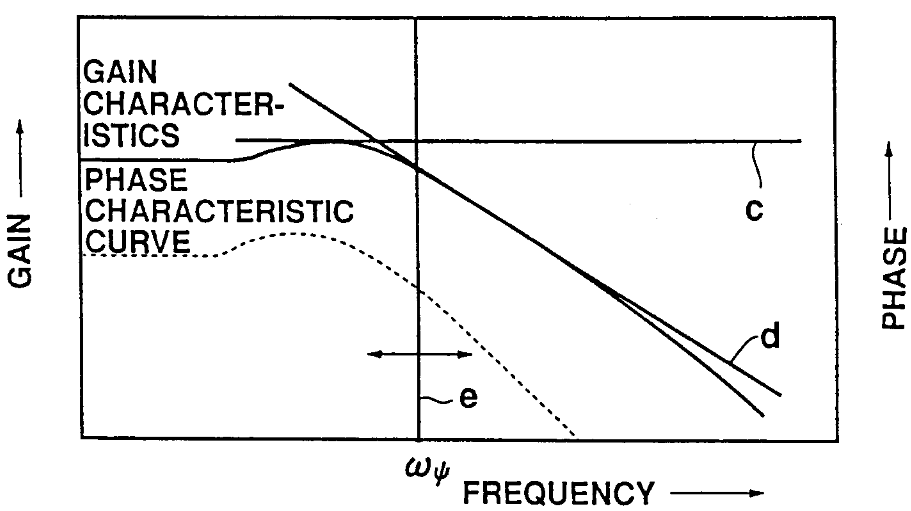

# FIG.10

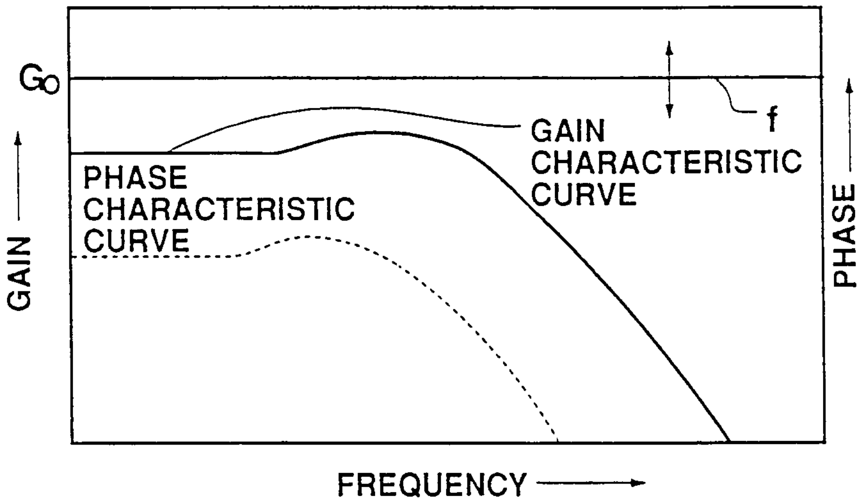


# FIG.11

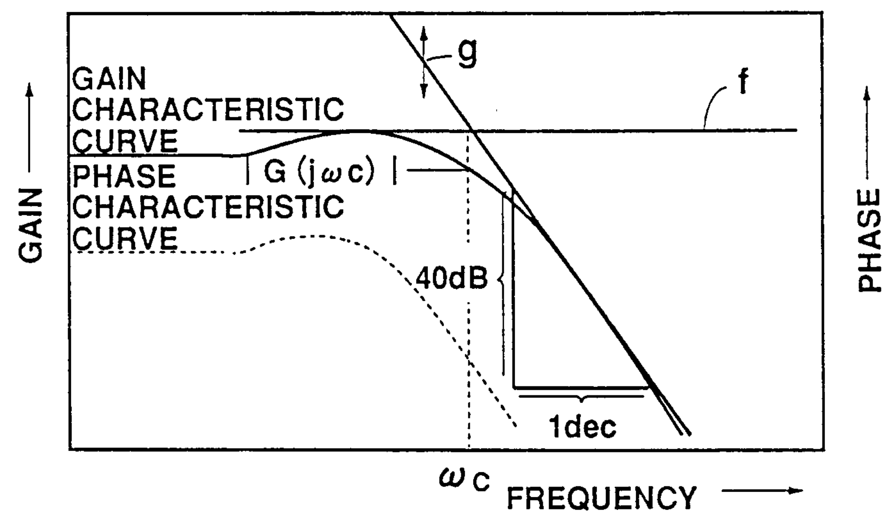


# FIG.12

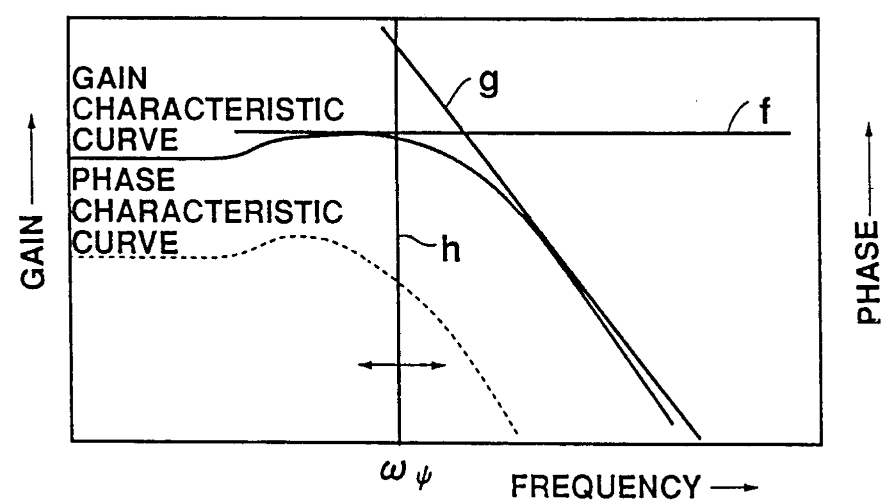

FIG.13

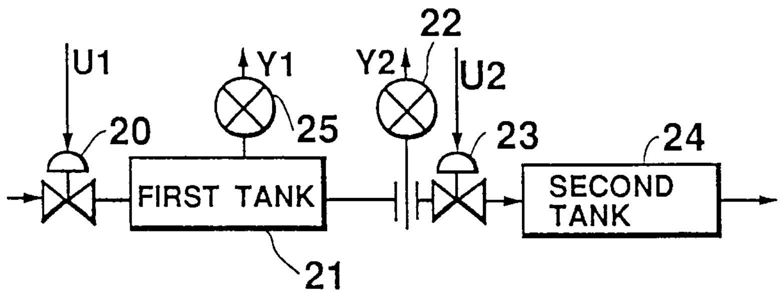


FIG.14 (a)

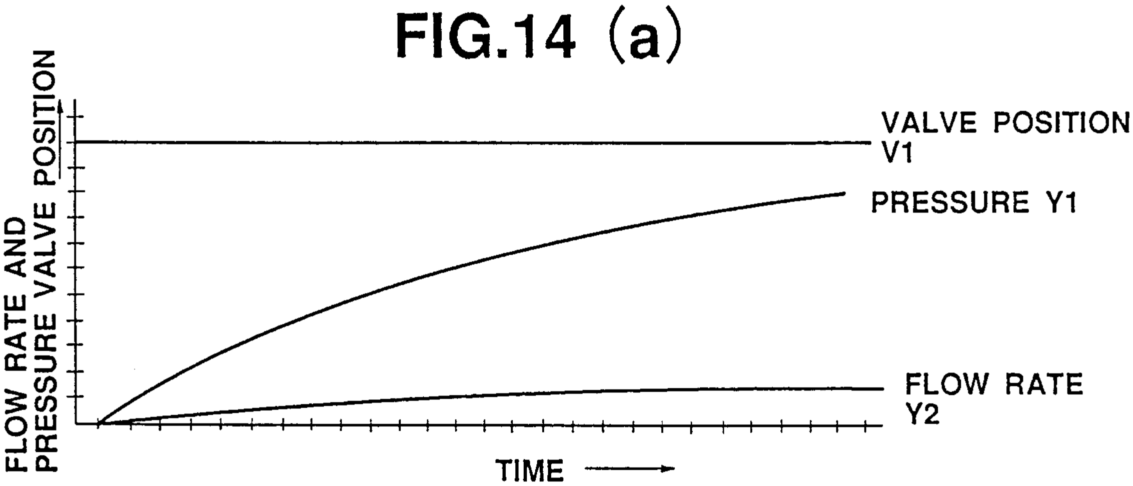


FIG.14 (b)

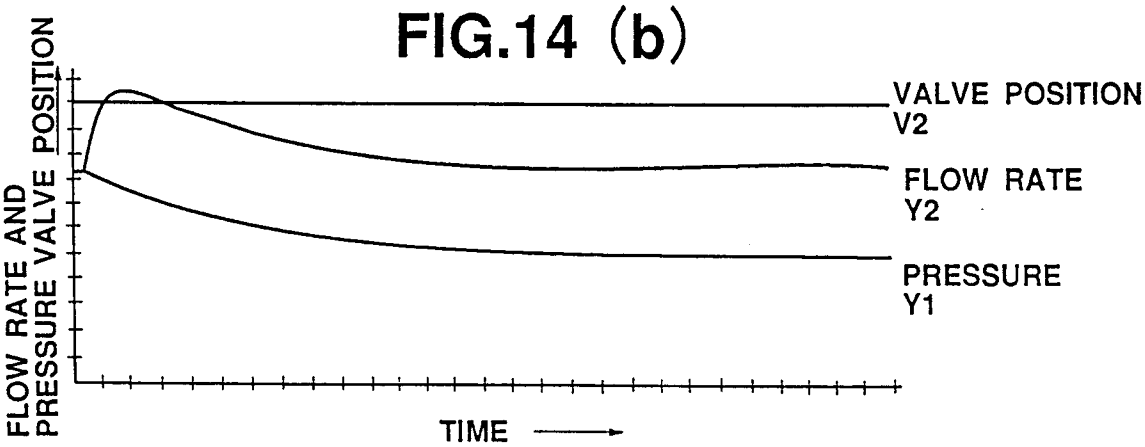

FIG.15 (a)

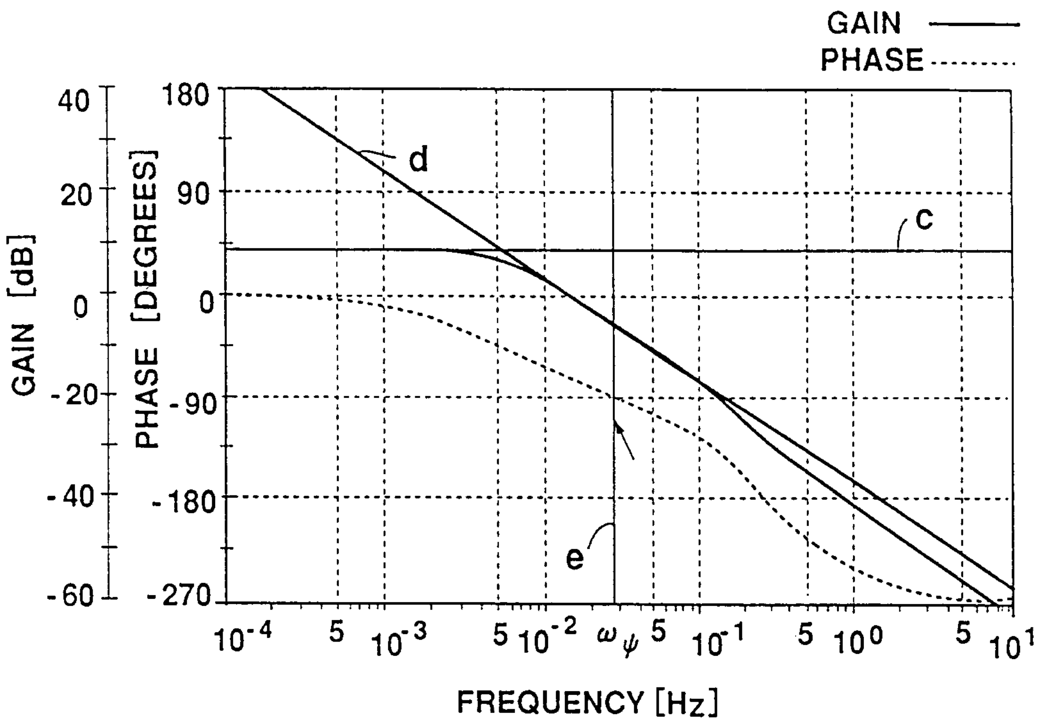


FIG.15 (b)

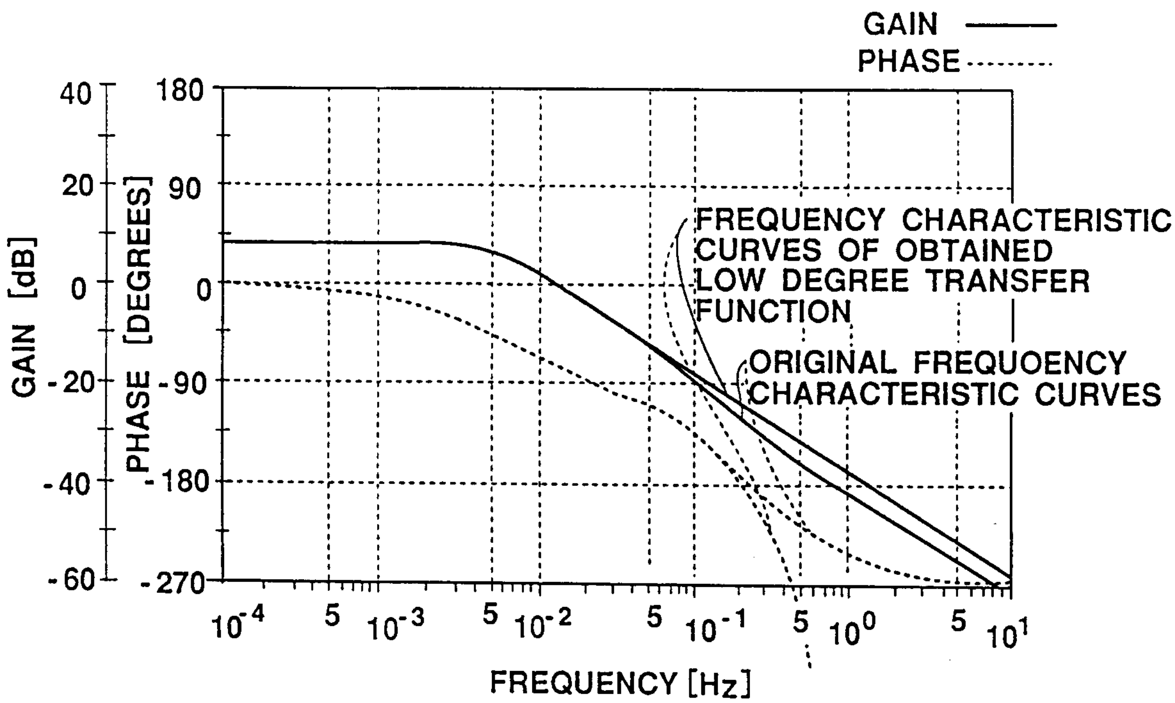

# FIG.16

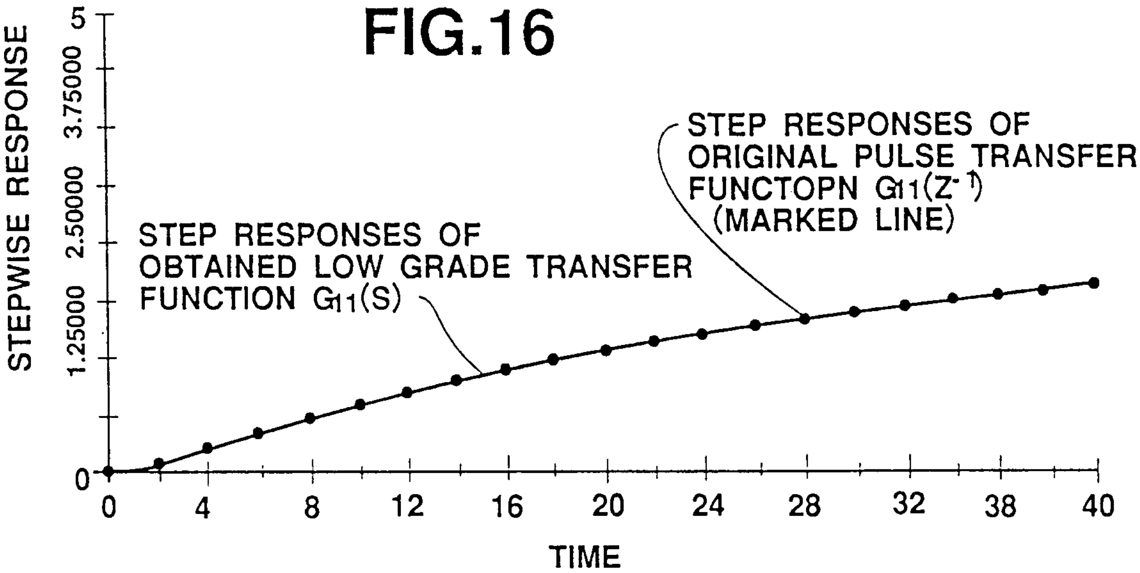
STEPWISE RESPONSE
5
3.75000
2.50000
1.25000
0
0
4
8
12
16
20
24
28
32
38
40
TIME
STEP RESPONSES OF OBTAINED LOW GRADE TRANSFER FUNCTION G11(S)
STEP RESPONSES OF ORIGINAL PULSE TRANSFER FUNCTOPN G11(Z-1) (MARKED LINE)

# FIG.17

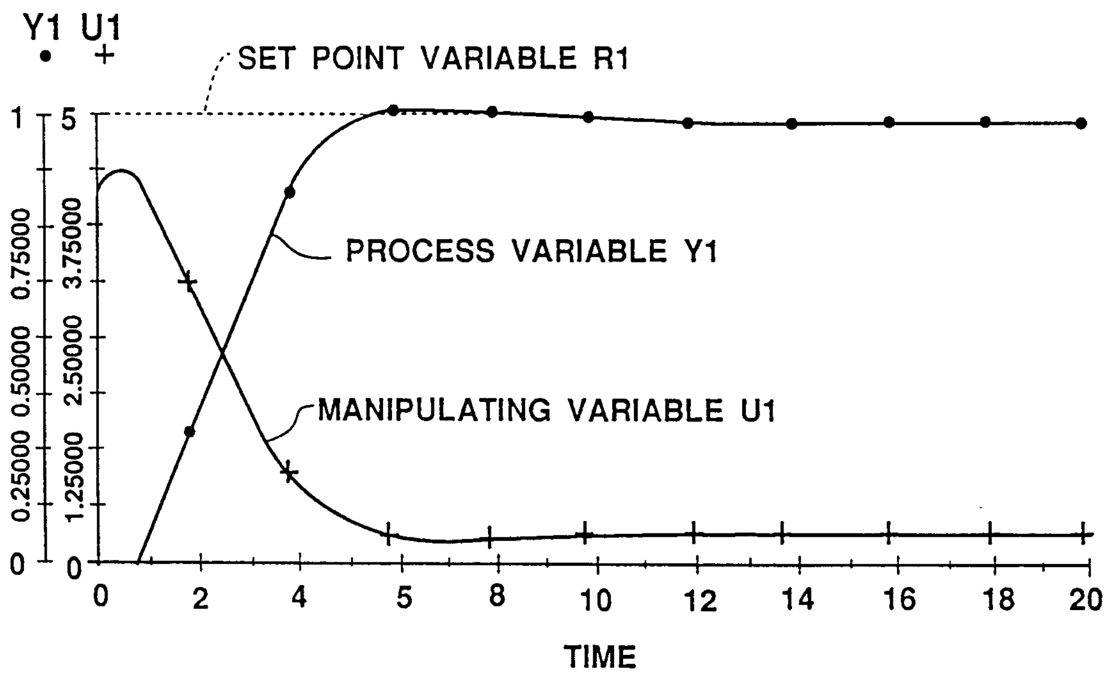
Y1 U1
• +
SET POINT VARIABLE R1
1
5
0.75000
3.75000
0.50000
2.50000
0.25000
1.25000
0
0
0
2
4
5
8
10
12
14
16
18
20
TIME
PROCESS VARIABLE Y1
MANIPULATING VARIABLE U1

FIG.18 (a)

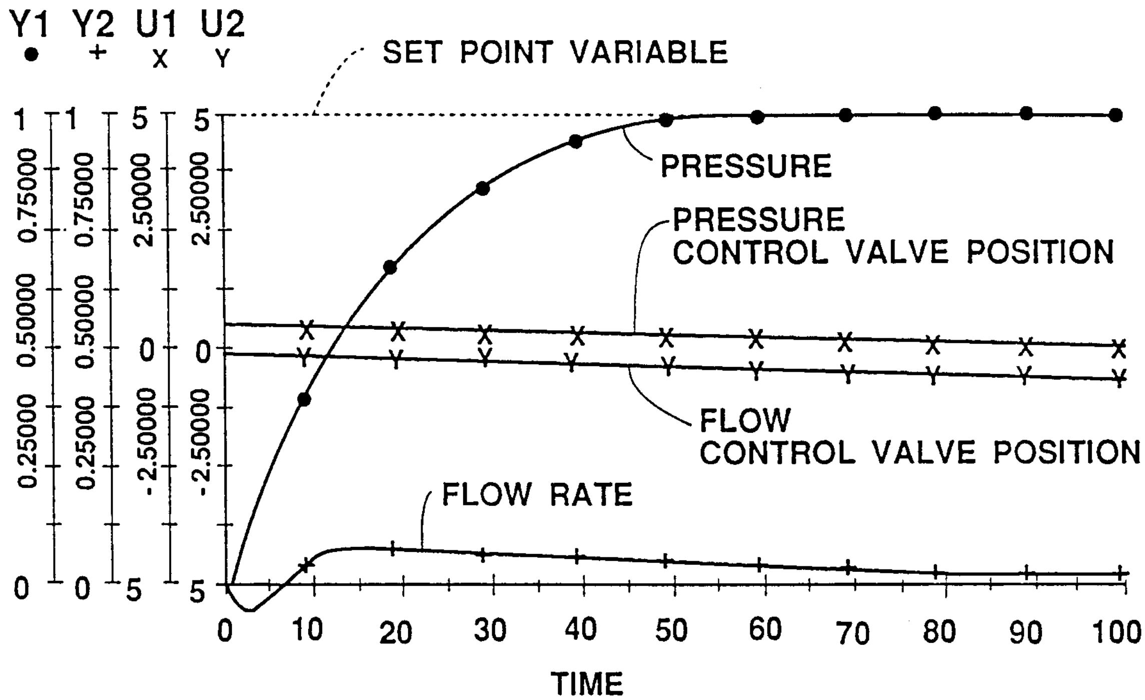


FIG.18 (b)